# FASCICULE DE BREVET EUROPEEN

(11) **EP 3 267 930 B1**
(45) Date de publication et mention de la délivrance du brevet: **07.08.2019**
(21) Numéro de dépôt: 16713543.3
(22) Date de dépôt: 08.03.2016
(51) Int. Cl.: A61C 8/00

(54) **ENSEMBLE PROTHETIQUE DENTAIRE, SYSTEME ANCILLAIRE POUR LE MONTAGE/DEMONTAGE D'UN PILIER SUR UN IMPLANT DENTAIRE**
ZAHNPROTHESENANORDNUNG, HILFSSYSTEM ZUR MONTAGE EINES ABUTMENTS AN EINEM DENTALIMPLANTAT UND ZUR ENTFERNUNG DES ABUTMENTS
DENTAL PROSTHESIS ASSEMBLY, ANCILLARY SYSTEM FOR FITTING AN ABUTMENT ON A DENTAL IMPLANT AND FOR REMOVING SAID ABUTMENT

(30) Priorité: 09.03.2015 FR 1551956
(43) Date de publication de la demande: 17.01.2018
(73) Titulaire: Global D, 69530 Brignais (FR)
(72) Inventeur: LAURENT, Olivier Jérôme, 69700 Givors (FR); CASIMIRO, Roméo, 69230 St Genis Laval (FR)
(74) Mandataire: Benech, Frédéric
(86) Numéro de dépôt international: PCT/FR2016/050533
(87) Numéro de publication internationale: WO 2016/142622

(56) Documents cités:
- WO-A1-97/37608
- US-A1- 2002 115 040
- US-A1- 2013 004 915

## Description

La présente invention concerne un ensemble prothétique dentaire comprenant un système ancillaire de montage/démontage comportant au moins un outil, au moins un implant dentaire et au moins un pilier muni d'une jonction tronconique avec l'implant.

Elle concerne aussi un système ancillaire de montage/démontage d'un pilier sur un implant dentaire du type précédemment mentionné.

Elle trouve une application particulièrement importante bien que non exclusive dans le domaine de la chirurgie dentaire de reconstitution.

Un procédé de montage/démontage d'un tel pilier sur un implant est par ailleurs décrit dans la présente demande.

On connaît de façon classique des piliers ou faux moignons de cicatrisation comprenant une vis de liaison avec l'implant qui vient bloquer le pilier en le traversant pour se visser dans l'implant.

On utilise (WO 97/37608) pour ce faire un outil (tournevis) qui vient attaquer la vis au travers du pilier.

Un tel ensemble présente des inconvénients.

Il nécessite la mise en place d'une petite vis, toujours susceptible de glisser et tomber dans la bouche du patient.

En cas de desserrement notamment sous l'action des forces de mastication on observe une mobilité du pilier créant un inconfort pour le patient pouvant aller jusqu'à la fracture de l'implant ou sa perte.

Pour pallier ces inconvénients il a été proposé des solutions permettant de bloquer la vis en rotation par exemple en accroissant les forces de friction (en recouvrant la vis de liaison avec des matériaux à fort coefficient de frottement comme l'Or) .

Une telle solution est coûteuse.

De plus, en permettant un bon blocage du dévissage de la vis, elle crée un problème qui est la conséquence de cet excellent blocage, à savoir une grande difficulté à démonter le faux moignon.

Or même si l'ensemble prothétique est ainsi plus solide, du fait d'une excellente fixation, il n'est néanmoins pas à l'abri de devoir être changé et/ou réparé.

De plus l'utilisation d'une vis notamment avec une tête de vissage, impose un aménagement d'un volume conséquent dans le pilier, réduisant d'autant l'épaisseur des parois et empêchant de concevoir des piliers ayant une résistance mécanique suffisante, anatomiques et optimisés pour la réhabilitation dentaire.

La présente invention vise à pallier ces inconvénients en fournissant un ensemble prothétique, un système ancillaire et un procédé les concernant, répondant mieux que ceux antérieurement connus aux exigences de la pratique, notamment en ce qu'elle autorise une excellente fixation du pilier ou faux moignon sur l'implant, tout en autorisant son montage/démontage de façon facile et simple.

L'invention part en particulier de l'idée de se dispenser totalement de l'utilisation de vis pour retenir le pilier sur l'implant et ce de manière permanente.

Il va ainsi être notamment possible de désencastrer facilement le pilier de l'implant tout en ayant une fixation solide propice à résister efficacement à la désolidarisation.

Un autre avantage de l'invention est d'autoriser la séparation du pilier et de l'implant même dans le cas où celui-ci casserait au ras de l'implant.

Elle permet ainsi, notamment en proposant des outils adaptés et de dimensions plus aisées à manipuler par l'opérateur/praticien, d'avoir des taraudages plus petits et donc d'augmenter les épaisseurs des différentes parties de l'ensemble, ce qui renforce les propriétés mécaniques de ses composants dont le pilier.

Dans ce but la présente invention propose notamment un ensemble prothétique dentaire comprenant un système ancillaire de montage et/ou démontage comportant au moins un outil, au moins un implant muni d'un premier alésage interne borgne, comportant sur une portion d'extrémité distale un premier taraudage sur une première distance déterminée d à partir du fond du premier alésage et une portion d'extrémité proximale tronconique de jonction avec au moins un pilier, ledit pilier comprenant une partie d'extrémité distale au moins en partie tronconique de jonction avec la portion d'extrémité proximale de l'implant, agencée pour que la surface de ladite partie d'extrémité distale du pilier collabore à frottement avec la surface de la portion d'extrémité proximale de jonction lorsque la jonction entre implant et pilier est complète, ledit pilier étant muni d'un second alésage interne, de passage de l'outil, et comprenant un second taraudage interne et un premier épaulement formant butée longitudinale pour l'outil, le second taraudage interne s'étendant sur une longueur l déterminée à partir d'un distance D du bout périphérique distal du pilier, le système ancillaire comprenant un premier outil ancillaire de montage du pilier sur l'implant et un second outil ancillaire de démontage du pilier à partir de l'implant, les deux outils étant chacun en forme de tige allongée autour d'un axe muni chacun d'un côté d'un manchon de préhension, et de l'autre côté, séparé par une portion intermédiaire, d'une portion d'extrémité agencée pour coopérer avec la portion d'extrémité distale du premier alésage de l'implant, la portion d'extrémité du second outil ancillaire de démontage étant de dimension transversale ou diamètre inférieur au diamètre interne du premier taraudage et s'étendant sur une distance y, à partir de l'extrémité distale de la portion d'extrémité du second outil, telle que y > d, de sorte que l'extrémité distale de la portion d'extrémité peut venir en butée sur le fond de l'alésage de l'implant lorsque le second outil est inséré dans l'implant au travers de l'alésage interne du pilier, la portion intermédiaire du second outil comprenant un second filetage d'extrémité distale située à la distance y, ledit second filetage étant agencé pour collaborer avec le second taraudage et faire remonter/désencastrer le pilier par rapport à l'implant lors du vissage du second outil dans le pilier, lorsque ladite extrémité distale de la portion d'extrémité dudit second outil vient s'appuyer sur le fond du premier alésage dudit implant
caractérisé en ce que la portion d'extrémité (21) du premier outil (3) ancillaire de montage comprend un premier filetage (37) agencé pour coopérer avec le premier taraudage (13), et la portion intermédiaire (39) comprend un second épaulement (43) agencé pour venir en butée sur le premier épaulement (28) du pilier (6) pendant le vissage dudit premier filetage (37) dans le premier taraudage (13) de l'implant (5) lors du montage, de façon à bloquer en force la portion d'extrémité proximale (16) de l'implant avec la partie d'extrémité distale (21) du pilier.

A noter que le taraudage du pilier étant au niveau de la connectique interne, il reste toujours utilisable pour retirer la partie restante du pilier si celui-ci casse au ras de l'implant.

Par montage/démontage on entend plus particulièrement ici, une fois l'implant mis en place, les opérations respectivement de solidarisation ou jonction et de désolidarisation ou desencastrement du pilier avec ledit implant.

On entend également par portion, une zone de l'élément considéré, s'étendant sur une distance inférieure à 50% de la longueur totale de l'élément, de préférence inférieure à 30% par exemple 20%.

Une portion d'extrémité s'étend ainsi par exemple de l'extrémité ou bout considéré et sur une distance comprise par exemple entre 10% et 25% de la longueur totale.

La jonction s'opérant sur une grande partie de la périphérie de la partie d'extrémité distale (par exemple un tiers) du pilier, les espaces de rétention, entre le pilier et l'implant sont réduits, ce qui diminue les risques de création de colonies bactériennes.

La jonction conique entre pilier et implant, qui a pu être mise en compression de façon précise grâce à l'outil de montage, et ce sans déviation comme en cas de vissage avec une vis de transfixation, permet cette friction accrue, assimilable à une véritable soudure à froid donnant la même sécurité de fixation qu'avec une vis et ce de façon surprenante.

On observe en effet une excellente résistance aux micromouvements.

Une telle fixation rendait cependant la dépose du pilier a priori quasi impossible du fait de la friction/soudure de l'un sur l'autre

Celle-ci est rendu possible grâce à l'outil de démontage tel que décrit qui utilise le principe de la démultiplication des forces par levier/vissage.

Dans des modes de réalisation avantageux, on a par ailleurs et/ou de plus recours à l'une et/ou à l'autre des dispositions suivantes :
- la portion d'extrémité proximale tronconique de l'implant et la partie d'extrémité distale tronconique du pilier collaborant ensemble à frottement définissent une surface tronconique de frottement entre eux comprise entre 5 mm² et 20 mm² lorsqu'ils sont complètement insérés l'un dans l'autre ;
- l'angle de conicité α des troncs de cône est compris entre 3° et 16° ;
- l'angle de conicité α est de l'ordre de 5° ;
- l'implant est sensiblement cylindrique de diamètre externe maximum inférieur à 3,2 mm.

Par sensiblement cylindrique on entend notamment que la surface externe de l'implant peut être circonscrite dans un cylindre ou que la différence des diamètres maximal et minimal de l'implant est inférieur à 10% du diamètre maximal et/ou que l'implant est tronconique de conicité inférieure à 10% ou pseudoconique.

L'invention concerne aussi un système ancillaire de montage/démontage sur un implant dentaire du type ci-dessus, caractérisé en ce que le système est constitué d'un premier outil ancillaire de montage et d'un second outil ancillaire de démontage tous deux en forme de tige allongée autour d'un axe muni chacun d'un côté d'un manchon de préhension, et de l'autre côté, séparé par une portion intermédiaire d'une portion d'extrémité agencée pour être insérée dans lesdits alésages,
en ce que la portion d'extrémité du premier outil ancillaire de montage comprend un premier filetage agencé pour coopérer avec la portion d'extrémité distale taraudée du premier alésage et sa portion intermédiaire comprend un second épaulement de blocage en butée du pilier en compression dans le second alésage interne,
en ce que la portion d'extrémité du second outil ancillaire de démontage est de dimension transversale ou diamètre inférieur au diamètre de la portion d'extrémité distale taraudée de sorte qu'il est propre à venir en butée dans le fond fileté du premier alésage lorsque le second outil est inséré dans l'implant au travers du pilier et sa portion intermédiaire comprend un second filetage agencé pour collaborer avec le second taraudage du second alésage et faire remonter/désencastrer le pilier par rapport à l'implant lors du vissage, lorsque la portion d'extrémité dudit second outil vient en butée sur le fond du premier alésage.

L' ensemble prothétique tel que décrit ci-avant peut être utilisé dans un procédé de montage et/ou démontage d'un pilier sur un implant, ledit implant étant muni d'un premier alésage interne borgne, comportant sur une portion d'extrémité distale un premier taraudage sur une première distance déterminée d à partir du fond de l'alésage et une portion d'extrémité proximale tronconique de jonction avec le pilier,
ledit pilier comprenant une partie d'extrémité distale tronconique de jonction avec la portion d'extrémité proximale de l'implant, étant muni d'un second alésage interne, de passage de l'outil, et comprenant un second taraudage interne et un premier épaulement formant butée longitudinale pour l'outil, le second taraudage interne s'étendant sur une longueur déterminée l à partir d'un distance D du bout périphérique distal du pilier,
caractérisé en ce que pour réaliser le montage d'un pilier sur un implant on introduit dans le premier et le second alésage un premier outil ancillaire de montage en forme de tige allongée autour d'un axe muni d'un côté d'un manchon de préhension, et de l'autre côté, séparé par une portion intermédiaire, d'une portion d'extrémité comprenant un premier filetage agencé pour coopérer avec le premier taraudage, la portion intermédiaire comprenant un second épaulement,
et on visse le premier filetage dans le premier taraudage avec un couple de serrage déterminé pour mettre en pression le second épaulement en butée sur le premier épaulement du pilier, de façon à bloquer en force la portion d'extrémité proximale tronconique de l'implant avec la partie d'extrémité distale en partie tronconique du pilier, la surface de ladite partie d'extrémité distale du pilier collaborant à frottement avec la surface de ladite portion d'extrémité proximale de jonction de l'implant,
et en ce que, pour réaliser le démontage, la portion d'extrémité du second outil ancillaire de démontage étant de dimension transversale ou de diamètre inférieur au diamètre interne du premier taraudage et s'étendant sur une distance y, de l'extrémité de la portion d'extrémité du second outil, telle que y > d, on insère ledit second outil dans l'implant au travers du second alésage interne du pilier pour mettre en butée l'extrémité distale de la portion d'extrémité sur le fond du premier alésage de l'implant,
et la portion intermédiaire du second outil comprenant un second filetage d'extrémité distale située à la distance y, ledit second filetage étant agencé pour collaborer avec le second taraudage, on visse le second outil dans le pilier ce qui fait remonter le pilier par rapport à l'implant par vissage du filetage dans le taraudage, ladite extrémité distale de la portion d'extrémité dudit second outil restant en appui sur le fond dudit implant, jusqu'à désencastrement complet du pilier de l'implant.

Egalement avantageusement on exerce un couple de serrage/déserrage du pilier par rapport à l'implant compris entre 10 N.cm et 20 N.cm.

La présente demande décrit également un procédé de montage/démontage d'une prothèse dentaire constituée d'un implant et d'un pilier, caractérisé en ce que, pour réaliser le montage, on introduit un implant muni d'un alésage interne borgne, ledit alésage comportant sur une portion d'extrémité distale un premier taraudage sur une première distance déterminée d à partir du fond de l'alésage et une portion d'extrémité proximale tronconique de jonction avec un pilier, dans une mâchoire préalablement préparée,
- on introduit dans l'implant un pilier comprenant une partie d'extrémité distale tronconique de jonction avec la portion d'extrémité proximale de l'alésage de l'implant agencée pour que la périphérie de ladite partie d'extrémité distale du pilier collabore à frottement avec la portion d'extrémité proximale de jonction, ledit pilier étant muni d'un alésage interne de passage d'un outil comprenant un second taraudage interne et un premier épaulement formant butée longitudinale pour l'outil, le second taraudage interne s'étendant sur une longueur déterminée l à partir d'une distance D du bout périphérique distal du pilier,
- on introduit un premier outil ancillaire de montage successivement dans le second puis le premier alésage, ledit premier outil ancillaire étant en forme de tige allongée autour d'un axe muni d'un côté d'un manchon de préhension, et de l'autre côté, séparé par une portion intermédiaire, d'une portion d'extrémité munie d'un premier filetage agencé pour coopérer avec le premier taraudage, et la portion intermédiaire comprenant un second épaulement agencé pour venir en butée sur le premier épaulement du pilier,
- on visse le premier filetage dans le premier taraudage avec un couple de serrage déterminé, de façon à bloquer en force par frottement entre surfaces respectives et par jonction conique, la portion d'extrémité proximale de l'implant avec la partie d'extrémité distale du pilier.

Avantageusement, pour réaliser le démontage, on introduit dans l'implant au travers de l'alésage interne du pilier un second outil ancillaire de démontage muni d'une portion d'extrémité cylindrique de diamètre inférieur à celui du premier taraudage et s'étendant sur une distance y > d, et d'une portion intermédiaire du second outil comprenant un second filetage d'extrémité distale située à la distance y de l'extrémité de la portion d'extrémité distale du second outil, ledit second filetage étant agencé pour collaborer avec le second taraudage,
- on fait tourner le second outil ce qui fait remonter le pilier par rapport à l'implant par vissage du second filetage de l'outil dans le second taraudage du pilier du fait de la butée de l'extrémité de la portion d'extrémité distale sur le fond de l'alésage de l'implant jusqu'à désencastrement complet du pilier de l'implant.

L'invention sera mieux comprise à la lecture de la description qui suit d'un mode de réalisation donné ci-après, à titre d'exemple non limitatif. La description se réfère aux dessins qui l'accompagnent dans lesquels :
La figure 1 montre en vue latérale et/ou en coupe un ensemble prothétique dentaire selon un mode de réalisation de l'invention.
Les figures 2 et 3 illustrent les deux étapes de début et de fin de montage de la prothèse (implant et pilier), représentée en coupe et appartenant à l'ensemble de la figure 1.
La figure 4 est une vue latérale en coupe de l'implant et du pilier de la figure 1 après solidarisation de l'un avec l'autre selon le mode de réalisation du procédé correspondant aux étapes des figures 2 et 3.
Les figures 5 à 8 illustrent les étapes de démontage de la prothèse de la figure 4 selon le mode de réalisation du procédé décrit ici.
La figure 7A représente une vue de détail de la figure 7 montrant la jonction pilier/implant.

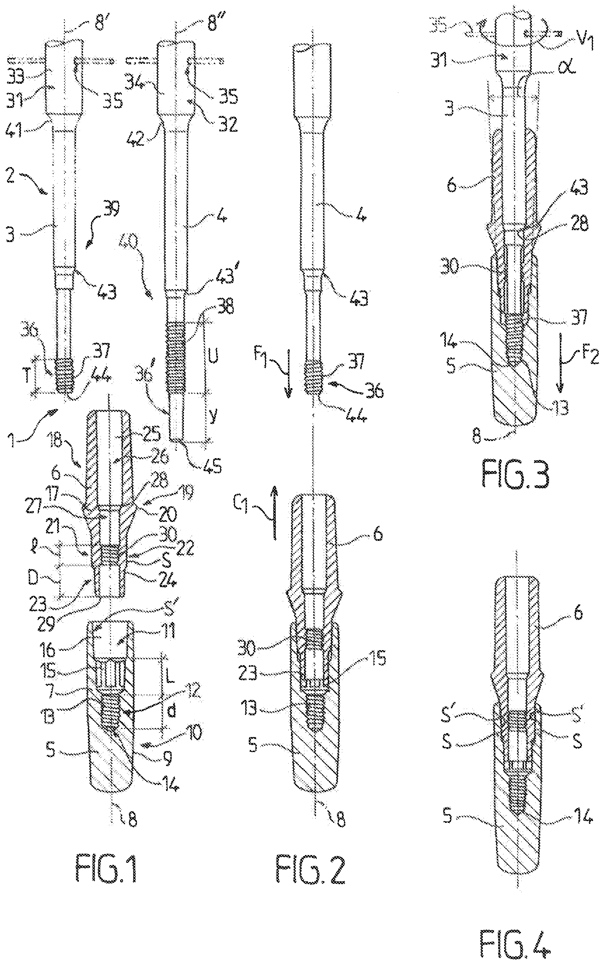

La figure 1 montre un ensemble 1 prothétique dentaire, comprenant un système ancillaire 2 constitué de deux outils respectivement de montage 3 et de démontage 4, d'un implant 5 et d'un pilier 6 adapté pour collaborer avec ledit implant 5.

L'implant 5 est formé d'un corps 7 d'ancrage notamment dans la mâchoire d'un patient, allongé autour d'un axe 8. L'implant est sensiblement cylindrique et/ou tronconique par exemple de conicité inférieure à 15%, par exemple inférieure à 10%, par exemple 7%.

Dans le mode de réalisation décrit, l'implant est impactable (sans pas de vis externe).

Mais l'implant peut également être muni sur son pourtour périphérique 9 sur au moins une partie de sa portion 10 d'extrémité d'une partie filetée (non représentée) par exemple auto taraudante connue en elle-même.

Le diamètre externe maximal de l'implant est en général inférieur à 5 mm. Mais avantageusement il est inférieur à 4 mm, par exemple inférieur à 3,5 mm et plus particulièrement inférieur à 3,2 mm.

Toujours en référence à la figure 1, l'implant 5 est muni d'un premier alésage interne 11 borgne par exemple de diamètre de l'ordre de 0.9 mm, comportant une portion 12 d'extrémité distale.

Celle-ci comprend un premier taraudage 13 selon un premier pas de vis déterminé sur une première distance d par exemple comprise entre 1 mm et 4 mm, par exemple égale à 1,7 mm, à partir du fond 14 du premier alésage, ou entre 15% et 75% de la hauteur totale de l'implant.

Le fond 14 forme une surface d'appui, par exemple de forme pyramidale (section transversale triangulaire) ou sensiblement concave. Il se situe ici sensiblement dans le plan de la dernière ligne de filetage horizontale du taraudage 13.

Dans ce mode de réalisation, l'alésage 11 comporte également au-dessus de cette portion 12 d'extrémité distale taraudée, une portion intermédiaire 15, connue en elle-même, en forme de cylindre à pan coupés de diamètre supérieur au taraudage 13, d'indexation/blocage et de réception d'un outil pour l'impaction du pilier dans l'implant.

La portion intermédiaire 15 s'étend sur une distance L déterminée suffisante pour remplir les fonctions recherchées, au-dessus et à partir de la portion 12 d'extrémité distale.

L'alésage interne 11 comprend par ailleurs une portion 16 d'extrémité proximale de jonction avec le pilier 6 et de diamètre supérieur ou égal à celui de la portion 15 intermédiaire.

La portion 16 d'extrémité proximale de l'alésage 11 est tronconique ou sensiblement tronconique de section transversale circulaire et présente une surface interne S' supérieure à 5 mm², par exemple supérieure à 15 mm², par exemple 20 mm².

Le pilier 6, ou faux moignon, est constitué d'un corps 17 de forme allongée autour d'un axe 8, l'axe 8 de l'implant 5 et l'axe 8 du pilier 6 étant agencé pour coïncider lorsque le pilier 6 est monté sur l'implant 5.

Le pilier 6 comprend par ailleurs une partie 18 d'extrémité proximale cylindrique formant interface de fixation ou d'accrochage, par exemple d'une prothèse dentaire (non représentée), de manière connue en soi de l'homme du métier.

Dans le prolongement de cette partie 18, le pilier comprend une partie 19 intermédiaire munie d'une base (ou épaulement).

La base 19 est munie d'une collerette 20 descendant en biais vers le bas, de jonction avec la partie gingivale lorsque le faux moignon 6 est en place, de façon connue.

Le pilier 6 comprend en outre dans le prolongement de la base 19 une partie 21 d'extrémité distale.

La partie 21 d'extrémité distale est elle-même en partie tronconique de forme complémentaire à la portion 16 d'extrémité proximale de jonction de l'implant.

Plus précisément et dans le mode de réalisation plus particulièrement décrit ici elle est constituée d'une première portion 22 cylindrique ou légèrement tronconique et d'une seconde portion 23, tronconique (de forme complémentaire à la portion 16) en léger décrochement (24) par rapport à la première.

Dans les modes de réalisation dans lesquels l'implant 5 comporte une portion 15 intermédiaire d'indexation, la seconde portion 23 de la partie 21 d'extrémité distale du pilier 6 est de forme complémentaire à la portion 15 intermédiaire de l'implant 5, par exemple de section transversale hexagonale.

La périphérie externe de la première portion tronconique 22 de la partie 21 d'extrémité distale du pilier 6 présente une surface S déterminée définissant, lorsque le pilier 6 est en place dans l'implant 5, une surface de frottement tronconique avec la surface interne S' de la portion 16 d'extrémité proximale de l'implant qui est comprise entre 5 mm² et 20 mm², par exemple comprise entre 10 mm² et 15 mm².

Avantageusement, lorsqu'il y a une connectique en jonction complète S = S' = Surface de frottement.

Par jonction complète on entend la jonction mécanique de l'implant 5 avec le pilier 6 en compression l'un sur l'autre sans qu'il n'y ait plus de possibilité de déplacement longitudinal relatif de l'un par rapport à l'autre (suivant l'axe 8).

Dans le mode de réalisation décrit ici les parties coniques forment par exemple une liaison cône Morse dont l'angle de conicité α des troncs des cônes est compris entre 2° et 20°, par exemple entre 3° et 15° par exemple 5°, ce qui augmente la friction et le maintien du pilier 6 dans l'implant 5.

Le pilier 6 est lui-même muni d'un second alésage 25 interne cylindrique traversant de passage de l'outil (3 ou 4).

Le second alésage 25 comprend un premier tronçon 26 du pilier interne à la partie proximale 18 de l'implant, et un second tronçon 27 interne aux parties intermédiaires 19 et distale 21 du pilier.

Le premier tronçon 26 est cylindrique de diamètre supérieur à celui du second tronçon 27 séparés entre eux par un premier épaulement 28 en forme de chanfrein à 30° (à leur interface).

Celui-ci forme une butée longitudinale et est par exemple positionné sensiblement en vis à vis de la base 19 du pilier 6.

Les efforts de pression les plus importants lors du montage du pilier sont ainsi localisés à l'endroit où les parois du pilier 6 sont les plus épaisses.

Le second alésage 25 comprend un second taraudage 30 interne, s'étendant sur une longueur l déterminée à partir d'une distance D du bout 29 (extrémité) périphérique distal du pilier 6.

La distance D est comprise entre 0 et 5 mm, par exemple 2 mm.

Dans le mode de réalisation plus particulièrement décrit ici, le second taraudage 30 s'étend dans l'espace interne de l'alésage 25 correspondant à la première portion 22.

Le filetage du second taraudage 30 est d'un pas déterminé et d'un diamètre égal ou supérieur à celui du premier taraudage 13.

Avantageusement les filetages des premier 13 et second 30 taraudages sont dans le même sens, à savoir tous deux des filetages à droite ou à gauche.

L'implant 5 et le pilier 6 sont en matériau biocompatible, par exemple en titane.

L'ensemble prothétique comprend également un système ancillaire 2 formé du premier outil 3 de montage du pilier 6 sur l'implant 5 et du second outil 4 de démontage dudit pilier 6 de l'implant 5.

Chacun des deux outils (3, 4) est en forme de tige allongée autour d'un axe 8', 8" et comprend à son extrémité proximale 31, 32 un élément de préhension 33, 34, par exemple en forme de manchons actionnables en rotation par des tiges amovibles traversantes de part en part.

Dans un mode de réalisation, les manchons 33, 34 comportent des moyens 35 d'adaptation d'une clé dynamométrique ou d'un moteur de chirurgie dentaire tels que des ergots de bridage ou un alésage borgne d'indexation de section polygonale (non représenté).

Les moyens 35 d'adaptation, par exemple ici à clé dynamométrique, sont propres à autoriser un couple de serrage/desserrage dans une plage comprise entre 8 N.cm et 25 N.cm, par exemple comprise entre 10 N.cm et 20 N.cm.

De l'autre côté, à leur portion d'extrémité distale, les premier et second outils (3, 4) sont munis d'une portion d'extrémité 36, 36' agencée pour coopérer avec la portion 12 d'extrémité distale du premier alésage 11 de l'implant 5 d'une façon qui sera détaillée ci-après.

La portion 36 d'extrémité distale du premier outil 3 de montage et un tronçon de l'extrémité distale d'une portion intermédiaire 40 du second outil 4 de démontage comprennent chacune un filetage, respectivement un premier filetage 37 et un second filetage 38.

Les extrémités distales et proximales des outils 3 et 4 sont en effet séparées chacune par une portion intermédiaire 39, 40, cylindriques, de plus petit diamètre que les manchons de préhension 31, 32, auxquels ils sont reliés une jonction 41, 42 chanfreinée.

A l'autre extrémité de la portion intermédiaire 39, 40, celle-ci est reliée à la portion d'extrémité distale 36, 36' par un second épaulement 43, 43' de forme complémentaire du premier épaulement de l'alésage interne du pilier.

Plus précisément et en référence au premier outil 3 (de montage), le second épaulement 43 est ici agencé pour venir en butée sur le premier épaulement 28 du pilier 6 lors du montage dudit pilier 6 au début de l'opération de montage, de façon à bloquer en force, dans la direction de l'outil, la portion 16 d'extrémité proximale de l'implant 5 avec la partie 21 d'extrémité distale du pilier 6.

Le pilier 6 n'est donc pas libre en translation suivant l'axe de l'outil 3 (coïncidant avec l'axe du pilier 5 et de l'implant 6 pendant le montage). Le vissage de la portion d'extrémité 36 filetée 37 de l'outil 3 dans le premier taraudage 13 génère alors une force de compression de la partie 21 d'extrémité distale du pilier 6 sur la partie 16 d'extrémité proximale de l'implant 5, de façon à bloquer en force le pilier 6 sur l'implant 5.

Le premier filetage 37 de la portion d'extrémité 36 du premier outil 3 s'étend depuis l'extrémité distale 44 (bout) de l'outil 3 sur une distance T déterminée, par exemple sensiblement égale à la distance d, comprise entre 1 et 3 mm.

Le filetage 37 est identique et donc adapté pour coopérer par vissage avec le premier taraudage 13 de l'implant.

La distance T est définie de manière connue en soi de l'homme de métier de sorte que lorsque l'outil 3 arrive en butée sur le fond 14 de l'implant 5 lors du vissage, au moins le minimum de couple de serrage désiré est atteint.

Dans un mode de réalisation, le diamètre extérieur maximal du filetage 37 est inférieur au diamètre intérieur du second taraudage 30 du pilier 6 de manière à pouvoir passer au travers sans résistance lors de l'insertion du premier outil 3.

Dans un autre mode de réalisation, le filetage 37 est adapté pour collaborer par vissage avec le second taraudage 30 du pilier 6 de manière à pouvoir passer au travers sans résistance par vissage. Dans ce mode de réalisation, les premier taraudage 13 et second taraudage 30 sont semblables et également adaptés à collaborer avec le filetage 37 du premier outil 3.

En référence maintenant au second outil 4 ancillaire de démontage, la portion d'extrémité 36' est ici de paroi lisse (non filetée) et de dimension transversale, ou diamètre, inférieure au diamètre interne du second taraudage 30 du pilier 6. Elle s'étend depuis l'extrémité distale 45 du second outil 4 sur une distance déterminé y, comprise entre 1 mm et 7 mm, par exemple 4 mm.

La portion intermédiaire 40 de l'outil 4 comprend quant-à-elle le filetage 38 agencé pour coopérer avec le second taraudage 30 et s'étendant sur une distance U déterminée comprise entre 1 mm et 10 mm, par exemple 4 mm.

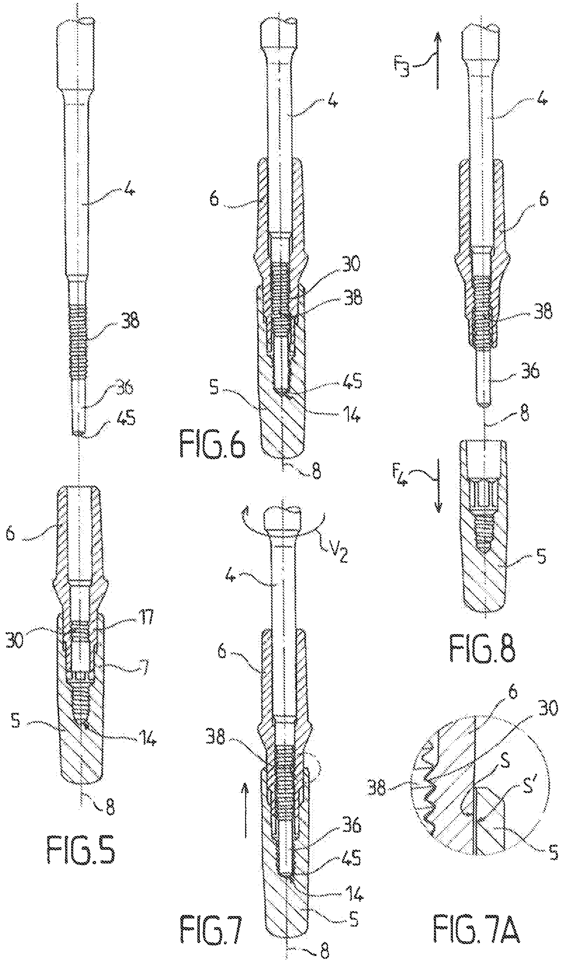

La distance U est supérieure à une valeur seuil, déterminée par exemple par essai, de telle sorte que lorsque l'outil 4 est en butée sur le fond 14 de l'implant 5, le pilier 6 soit complètement désengagé dudit implant 5 après avoir fait remonter/désencastrer le pilier 6 par rapport à l'implant 6 par vissage de l'outil dans le taraudage 30 (cf. figures 6, 7, 8).

Comme indiqué ci-avant le filetage 38, s'étend à partir d'une distance y par rapport à l'extrémité distale 45 de l'outil 4.

La longueur y de la portion distale 36 est strictement supérieure à la longueur d du premier taraudage 13, de sorte que le filetage 38 ne rentrera jamais en contact avec les filets du taraudage 13.

La portion d'extrémité 36' peut ainsi venir en butée contre le fond 14 de l'alésage 11 de l'implant 5 lorsque le second outil 4 est inséré dans l'implant 5 au travers de l'alésage 25 du pilier 6.

En d'autres termes et de cette manière le second filetage 38 ne peut pas venir mordre dans le premier taraudage 13 en fin de course ou buter sur ledit taraudage 13.

La surface transversale de l'extrémité distale de l'outil 4 est adaptée pour collaborer en appui sur le fond 14 de l'implant 5 lors du démontage du pilier 6.

Elle peut être plane, convexe ou par exemple complémentaire de la forme du fond.

On va maintenant décrire plus particulièrement en référence aux figures 2 à 4, un mode de réalisation selon l'invention du montage du pilier 6 sur l'implant 5.

Par la suite les éléments identiques ou similaires sont référencés avec les mêmes numéros de références.

Après avoir, par exemple, préalablement préparé une mâchoire en fixant un implant 5 dans celle-ci, on introduit (flèche F1) la partie 21 d'extrémité distale d'un pilier 6 dans la cavité d'accueil constituée par la portion 16 d'extrémité proximale de l'alésage 11 de l'implant 5.

Les portions tronconiques de la partie 21 du pilier 6 et de la portion 16 de l'implant 5 sont alors bout à bout, leur surface périphérique externe S et interne S' étant partiellement en regard transversalement (par exemple de 40% de la surface desdites portions).

Les axes 8 du pilier 6 et de l'implant 5 coïncidant, les alésages 13, 25 respectifs de l'implant 5 et du pilier 6 forment un alésage de passage de l'outil 3.

L'utilisateur saisit alors (par la partie manchon 33) le premier outil 3 de montage, qui est introduit, avec son extrémité distale 36 en premier, dans le second alésage 25 puis le premier alésage 16.

Dans le mode de réalisation plus particulièrement décrit ici, le filetage 37 du premier outil 3 de montage est adapté pour coopérer avec les premier et second taraudage 13 et 30.

L'utilisateur visse (Flèche V1) l'outil dans le second taraudage 30 jusqu'à ce que le dernier filet du filetage 37 débouche à la sortie du taraudage 30. Pendant cette opération, le poids et le corps de l'outil 3 facilite le maintien en place du pilier 6 sur l'implant 5.

Le filet d'attaque (le plus distal) du filetage 37 de l'outil 3 de montage arrive en position pour mordre dans le premier taraudage 13 sensiblement simultanément ou avant que l'épaulement 43 de l'outil 3 ne vienne en contact du premier épaulement 28 interne du pilier 6.

L'ancrage de l'implant, par exemple dans une mâchoire offre une contrepression (Flèche C1) permettant le vissage/serrage efficace.

L'utilisateur actionne les moyens 35 à clé dynamométrique (après les avoir installés /fixés sur le manchon le cas échéant) et visse la portion d'extrémité distale 21 de l'outil 3 dans l'implant 5.

L'utilisateur peut ainsi vérifier le couple de serrage appliqué et s'assure, d'atteindre la valeur seuil de couple de serrage pour assurer un bon maintien, tout en ne dépassant pas la valeur seuil de détérioration.

Les valeurs de serrage sont comprises entre 10 N.cm et 25 N.cm, par exemple comprises entre 12 N.cm et 15 N.cm, par exemple 13 N.cm.

Dans un autre mode réalisation les distances et longueurs ayant été préalablement calculées et définies, un indicateur visuel (non représenté) permet à l'utilisateur de connaitre le couple en fonction de la profondeur d'enfoncement de l'outil 3 dans l'ensemble pilier/implant.

Au fur et à mesure du vissage et donc de la descente de l'outil 3 dans l'ensemble (flèche F2), l'épaulement 43 de l'outil 3 exerce une pression sur le second épaulement 28 en butée de blocage longitudinal du pilier 6.

La portion d'extrémité distale 21 du pilier 6 descend/pénètre alors par encastrement progressif dans la portion proximale 16 de l'implant 5 et augmente progressivement la surface du cône réalisée par les surfaces tronconiques (S, S') en regard.

Dans les modes de réalisation comprenant une portion intermédiaire 15 d'indexation, le pilier 6 n'ayant pas de rotation pendant le vissage, sa partie la plus distale 23 s'enfonce également de la portion intermédiaire 15 ce qui prohibe alors la rotation relative ultérieure de l'implant 5 par rapport au pilier 6 suivant l'axe 8.

Lorsque le couple de serrage ciblé est atteint et/ou lorsque l'outil 3 de montage arrive en butée sur le fond 14 de l'implant 5, l'utilisateur dévisse alors ledit outil.

Les frictions mises en oeuvre sur les surfaces des parties de jonction S, S', du fait de la pression et de la liaison conique (par exemple cône morse) réalisées, entrainent une solidité importante de l'ensemble (implant/pilier) qui peut encore être améliorée par un revêtement de matériaux appropriés au niveau de la jonction tronconique.

Ces frictions assurent un blocage en force par frottement entre l'implant 5 et le pilier 6 et permettent le maintien en place respectif lors du dévissage sans entrainement de l'un par rapport à l'autre.

Ce maintien est également assuré lors de l'extraction de l'outil 3 par dévissage de l'extrémité distale de l'outil dans les premier 13 et second 30 taraudages.

En référence cette fois-ci aux figures 5 à 7A, on va maintenant détailler le mode d'extraction du pilier 6 de l'implant 5 selon le mode de réalisation plus particulièrement décrit ici.

Le pilier 6 et l'implant 5 étant solidaires (suite à un montage par le passé comme décrit ci-dessus), on introduit le second outil 4 de démontage dans l'alésage 25 de la portion 18 d'extrémité proximale du pilier 6.

La portion 36' d'extrémité distale du second outil 4 de démontage, de diamètre inférieur au diamètre interne du second taraudage 30 du pilier 6 passe au travers de celui-ci et arrive en butée sur le fond 14 de l'alésage de l'implant 5' (cf. figure 6).

Dans cette position, au moins le premier filet du second filetage 38 de l'outil 4 est en position de mordre (pénétré par vissage) dans le taraudage 30 du pilier.

Le premier épaulement 43' du second outil 4 est quant-à-lui à une distance de l'extrémité 45 de l'outil 4 supérieure à celle qui les sépare sur le premier outil 3, de sorte que le pilier 6 peut coulisser et/ou se translater le long du corps dudit outil 4 (flèche C2) sans venir en butée contre l'épaulement 43 avant que le pilier 6 n'ait été complètement désengagé.

Lorsqu'on continue à visser, l'extrémité de l'outil 4 forme un point d'appui sur le fond 14 et entraine un soulèvement du pilier 6, par effet de levier, éloignant selon la flèche F3 de plus en plus la périphérie externe S de la portion distale 21 du pilier 6 de celle du fond 14 de l'alésage 11 de l'implant 5 qui s'écarte selon la flèche F4.

La force de désencastrement est démultipliée du fait du vissage et du bras de levier ce qui permet un tel soulèvement malgré les contraintes.

En vissant le second outil 4 dans le second taraudage 30 du pilier, le filetage 38 entre en effet en contact avec le pilier 6 et va le soulever au fur et à mesure du vissage (cf. figures 7 et 7A).

Le déplacement du pilier 6 par rapport à l'implant 5 désactive alors la connexion entre les deux pièces implant 5 et pilier 6, qui se désenclenchent l'un de l'autre entrainant leur désolidarisation/libération. Ce dernier va ainsi et par exemple pouvoir être changé.

Dans un mode de réalisation avantageux les filetages 37, 38 et taraudage 13, 30 sont du même côté (tous à droite ou à gauche).

Cela permet à l'utilisateur d'avoir toujours le même sens de rotation pour les outils 3, 4 qu'ils soient de montage ou de démontage.

Comme il va de soi et comme il résulte également de ce qui précède, la présente invention n'est pas limitée aux modes de réalisation plus particulièrement décrits. Elle en embrasse au contraire toutes les variantes et notamment celles où les différentes pièces de l'élément prothétique sont en matériaux différents.

## Revendications

1. Ensemble prothétique dentaire (1) comprenant
un système ancillaire (2) de montage et/ou démontage comportant au moins un outil (3, 4),
au moins un implant (5) muni d'un premier alésage (11) interne borgne, comportant sur une portion d'extrémité distale (12) un premier taraudage (13) sur une première distance déterminée d à partir du fond du premier alésage (11) et une portion d'extrémité proximale (16) tronconique de jonction avec au moins un pilier (6),
ledit pilier comprenant une partie d'extrémité distale (21) au moins en partie tronconique de jonction avec la portion d'extrémité proximale (16) de l'implant, agencée pour que la surface (S) de ladite partie d'extrémité distale (21) du pilier collabore à frottement avec la surface (S') de la portion d'extrémité proximale (16) de jonction lorsque la jonction entre implant (5) et pilier (6) est complète, ledit pilier (6) étant muni d'un second alésage (25) interne, de passage de l'outil (3, 4), et comprenant un second taraudage (30) interne et un premier épaulement (28) formant butée longitudinale pour l'outil, le second taraudage (30) interne s'étendant sur une longueur 1 déterminée à partir d'un distance D du bout périphérique distal (29) du pilier, le système (2) ancillaire comprenant un premier outil (3) ancillaire de montage du pilier sur l'implant et un second outil (4) ancillaire de démontage du pilier à partir de l'implant, les deux outils étant chacun en forme de tige allongée autour d'un axe (8', 8") muni chacun d'un côté d'un manchon (33, 34) de préhension, et de l'autre côté, séparé par une portion intermédiaire (39, 40), d'une portion d'extrémité (36, 36') agencée pour coopérer avec la portion d'extrémité distale (10) du premier alésage (11) de l'implant, la portion d'extrémité (36') du second outil (4) ancillaire de démontage étant de dimension transversale ou diamètre inférieur au diamètre interne du premier taraudage (13) et s' étendant sur une distance y, à partir de l'extrémité distale (45) de la portion d'extrémité (36') du second outil, telle que y > d, de sorte que l'extrémité distale (45) de la portion d'extrémité (36') peut venir en butée sur le fond (14) de l'alésage (11) de l'implant lorsque le second outil (4) est inséré dans l'implant (5) au travers de l'alésage (11) interne du pilier, la portion intermédiaire (40) du second outil (4) comprenant un second filetage (38) d'extrémité distale (36') située à la distance y, ledit second filetage (38) étant agencé pour collaborer avec le second taraudage (30) et faire remonter/ désencastrer le pilier (6) par rapport à l'implant (5) lors du vissage du second outil dans le pilier, lorsque ladite extrémité distale (45) de la portion d'extrémité (36') dudit second outil (4) vient s'appuyer sur le fond (14) du premier alésage (11) dudit implant (5)
implant **caractérisé en ce que** la portion d'extrémité (21) du premier outil (3) ancillaire de montage comprend un premier filetage (37) agencé pour coopérer avec le premier taraudage (13), et la portion intermédiaire (39) comprend un second épaulement (43) agencé pour venir en butée sur le premier épaulement (28) du pilier (6) pendant le vissage dudit premier filetage (37) dans le premier taraudage (13) de l'implant (5) lors du montage, de façon à bloquer en force la portion d'extrémité proximale (16) de l'implant avec la partie d'extrémité distale (21) du pilier.

2. Ensemble selon la revendication 1, **caractérisé en ce que** la portion d'extrémité proximale (16) tronconique de l'implant (5) et la partie d'extrémité distale (21) tronconique du pilier (6) collaborant ensemble à frottement définissent une surface tronconique (S, S') de frottement entre eux comprise entre 5 mm2 et 20 mm2 lorsqu'ils sont complètement insérés l'un dans l'autre.

3. Ensemble selon l'une quelconque des revendications précédentes, **caractérisé en ce que** l'angle de conicité α des troncs de cône est compris entre 3° et 16°

4. Ensemble selon la revendication 3, **caractérisé en ce que** l'angle de conicité α est de l'ordre de 5°.

5. Ensemble selon l'une quelconque des revendications précédentes, **caractérisé en ce que** l'implant (5) est sensiblement cylindrique de diamètre externe maximum inférieur à 3,2 mm

6. Système ancillaire (2) de montage/démontage sur un implant (5) dentaire muni d'un premier alésage (11) interne borgne à portion d'extrémité distale (12) munie d'un premier taraudage, d'un pilier percé de part en part d'un second alésage (25) interne muni d'un second taraudage interne, **caractérisé en ce que** ledit système est constitué d'un premier outil (3) ancillaire de montage et d'un second outil (4) ancillaire de démontage tous deux en forme de tige allongée autour d'un axe (8', 8") muni chacun d'un côté d'un manchon (33, 34) de préhension, et de l'autre côté, séparé par une portion intermédiaire (39, 40), d'une portion d'extrémité (36, 36') agencée pour être insérée dans lesdits alésages,
**en ce que** la portion d'extrémité (36) du premier outil (3) ancillaire de montage comprend un premier filetage (37) agencé pour coopérer avec la portion d'extrémité distale taraudée (13) du premier alésage (11) et sa portion intermédiaire (39) comprend un second épaulement (43) de blocage en butée du pilier (6) en compression dans le second alésage (25) interne,
**en ce que** la portion d'extrémité (36') du second outil (4) ancillaire de démontage est de dimension transversale ou diamètre inférieur au diamètre de la portion d'extrémité distale taraudée de sorte qu'il est propre à venir en butée dans le fond (14) fileté du premier alésage lorsque le second outil (4) est inséré dans l'implant (5) au travers du pilier (6) et sa portion intermédiaire (40) comprend un second filetage (38) agencé pour collaborer avec le second taraudage (30) du second alésage (25) et faire remonter/désencastrer le pilier (6) par rapport à l'implant (5) lors du vissage, lorsque la portion d'extrémité (36') dudit second outil (4) vient en butée sur le fond (14) du premier alésage (11).

7. Système ancillaire (2) selon la revendication 6, **caractérisé en ce que** les manchons (33, 34) de préhension comprennent des moyens (35) d'adaptation à une clé de serrage/ desserrage dynamométrique ou à un moteur propre à autoriser un couple de serrage/desserrage des outils compris entre 10 N.cm et 20 N.cm.

## Patentansprüche

1. Zahnprothesenanordnung (1) mit einem Montage- und/oder Demontage-Hilfssystem (2) mit mindestens einem Werkzeug (3, 4),
mindestens einem Implantat (5) mit einer ersten internen Sackbohrung (11) mit einem ersten Innengewinde (13) auf einem distalen Endabschnitt (12) mit einer ersten bestimmten Strecke d ausgehend vom Boden der ersten Bohrung (11) und einem proximalen kegelstumpfförmigen Endabschnitt (16) zur Verbindung mit mindestens einer Stütze (6),
wobei die Stütze einen mindestens teilweise kegelstumpfförmigen distalen Endbereich (21) zur Verbindung mit dem proximalen Endabschnitt (16) des Implantats umfasst, welcher derart angeordnet ist,
dass die Oberfläche (S) des distalen Endbereichs (21) der Stütze durch Reibschluss mit der Oberfläche (S') des proximalen Verbindungsendabschnitts (16) zusammenwirkt, wenn die Verbindung zwischen Implantat (5) und Stütze (6) vollständig ist,
wobei die Stütze (6) mit einer zweiten internen Bohrung (25) für die Durchführung des Werkzeugs (3, 4) versehen ist, welche ein zweites Innengewinde (30) und eine erste Schulter (28) umfasst, welche einen Längsanschlag für das Werkzeug bildet,
wobei das zweite Innengewinde (30) sich auf eine Länge l erstreckt, die ausgehend von einer Strecke D des distalen peripheren Endes (29) der Stütze bestimmt wird,
wobei das Hilfssystem (2) ein erstes Hilfswerkzeug (3) für die Montage der Stütze auf das Implantat und ein zweites Hilfswerkzeug (4) für die Demontage der Stütze von dem Implantat umfasst,
wobei die zwei Werkzeuge jeweils die Form eines um eine Achse (8', 8") langgestreckten Schaftes aufweisen und jeweils auf einer Seite mit einer Griffhülse (33, 34) und auf der anderen Seite getrennt durch einen Zwischenabschnitt (39, 40) mit einem Endabschnitt (36, 36') versehen sind, welcher angeordnet ist, um mit dem distalen Endabschnitt (10) der ersten Bohrung (11) des Implantats zusammenzuwirken,
wobei der Endabschnitt (36') des zweiten Demontage-Hilfswerkzeugs (4) eine Querabmessung bzw. Durchmesser aufweist, welche geringer ist als der Innendurchmesser des ersten Innengewindes (13) und sich auf eine Strecke y ausgehend von dem distalen Ende (45) des Endabschnitts (36') des zweiten Werkzeugs mit y > d erstreckt,
so dass das distale Ende (45) des Endabschnitts (36') gegen den Boden (14) der Bohrung (11) des Implantats zur Anlage kommen kann, wenn das zweite Werkzeug (4) durch die interne Bohrung (11) der Stütze in das Implantat (5) eingeführt wird,
wobei der Zwischenabschnitt (40) des zweiten Werkzeugs (4) ein zweites Gewinde (38) des distalen Endes (36') in der Entfernung y umfasst,
wobei das zweite Innengewinde (38) angeordnet ist, um mit dem zweiten Innengewinde (30) zusammenzuwirken und die Stütze (6) in Bezug auf das Implantat (5) beim Verschrauben des zweiten Werkzeugs in der Stütze steigen zu lassen / zu entfernen, wenn das distale Ende (45) des Endabschnitts (36') des zweiten Werkzeugs (4) gegen den Boden (14) der ersten Bohrung (11) des Implantats (5) zur Anlage kommt,
wobei das Implantat
**dadurch gekennzeichnet ist,**
**dass** der Endabschnitt (21) des ersten Montage-Hilfswerkzeugs (3) ein erstes Gewinde (37) umfasst, das angeordnet ist, um mit dem ersten Innengewinde (13) zusammenzuwirken, und der Zwischenabschnitt (39) eine zweite Schulter (43) umfasst, die angeordnet ist, um während der Verschraubung des ersten Gewindes (37) im ersten Innengewinde (13) des Implantats (5) bei der Montage gegen die erste Schulter (28) der Stütze (6) zur Anlage zu kommen, so dass der proximale Endabschnitt (16) des Implantats gegen den distalen Endbereich (21) der Stütze kraftschlüssig gekontert wird.

2. Anordnung nach Anspruch 1,
**dadurch gekennzeichnet,**
**dass** der kegelstumpfförmige proximale Endabschnitt (16) des Implantats (5) und der kegelstumpfförmige distale Endbereich (21) der Stütze (6), die durch Reibschluss zusammenwirken, eine kegelstumpfförmige Reibfläche füreinander definieren, die zwischen 5 mm2 und 20 mm2 liegt, wenn sie vollständig ineinandergefügt sind.

3. Anordnung nach einem der vorhergehenden Ansprüche,
**dadurch gekennzeichnet,**
**dass** der Kegelwinkel α der Kegelstümpfe zwischen 3° und 16° liegt.

4. Anordnung nach Anspruch 3,
**dadurch gekennzeichnet,**
**dass** der Kegelwinkel α in der Größenordnung von 5° liegt.

5. Anordnung nach einem der vorhergehenden Ansprüche,
**dadurch gekennzeichnet,**
**dass** das Implantat (5) im Wesentlichen zylindrisch mit einem maximalen Außendurchmesser geringer als 3,2 mm ist.

6. Hilfssystem (2) zur Montage/Demontage auf einem Zahnimplantat (5) mit einer ersten internen Sackbohrung (11) mit einem distalen Endabschnitt (12) mit einem ersten Innengewinde, einer Stütze mit einer durchgehenden zweiten internen Bohrung (25) mit einem zweiten Innengewinde,
**dadurch gekennzeichnet,**
**dass** das System durch ein erstes Montage-Hilfswerkzeug (3) und ein zweites Demontage-Hilfswerkzeug (4) gebildet ist, die beide die Form eines um eine Achse (8', 8") langgestreckten Schaftes aufweisen und jeweils auf einer Seite mit einer Griffhülse (33, 34) und auf der anderen Seite getrennt durch einen Zwischenabschnitt (39, 40) mit einem Endabschnitt (36, 36') versehen sind, welcher angeordnet ist, um in die Bohrungen eingeführt zu werden,
der Endabschnitt (36) des ersten Montage-Hilfswerkzeugs (3) ein erstes Gewinde (37) umfasst, das angeordnet ist, um mit dem mit einem Innengewinde versehenen distalen Endabschnitt (13) der ersten Bohrung (11) zusammenzuwirken, und sein Zwischenabschnitt (39) eine zweite Schulter (43) als Anschlagssicherung für die in der zweiten internen Bohrung (25) zusammengedrückten Stütze (6) umfasst,
der Endabschnitt (36') des zweiten Demontage-Hilfswerkzeugs (4) eine Querabmessung bzw. Durchmesser aufweist, welche geringer ist als der Durchmesser des distalen, mit einem Innengewinde versehenen Endabschnitts, so dass es geeignet ist, gegen den mit einem Gewinde versehenen Boden (14) der ersten Bohrung (11) zur Anlage zu kommen, wenn das zweite Werkzeug (4) durch die Stütze (6) in das Implantat (5) eingeführt wird, und sein Zwischenabschnitt (40) ein zweites Gewinde (38) umfasst, das angeordnet ist, um mit dem zweiten Innengewinde (30) der zweiten Bohrung (25) zusammenzuwirken und die Stütze (6) in Bezug auf das Implantat (5) beim Verschrauben steigen zu lassen / zu entfernen, wenn der Endabschnitts (36') des zweiten Werkzeugs (4) gegen den Boden (14) der ersten Bohrung (11) zur Anlage kommt.

7. Hilfssystem (2) nach Anspruch 6,
**dadurch gekennzeichnet,**
**dass** die Griffhülsen (33, 34) Mittel (35) für die Anpassung an einen Drehmomentschlüssel zum Anziehen / Lösen oder an einen Motor umfassen, welche geeignet sind, ein Anzieh-/Lösedrehmoment der Werkzeuge zuzulassen, das zwischen 10 N.cm und 20 N.cm liegt.

## Claims

1. Dental prosthesis assembly (1) comprising
an ancillary fitting and/or removal system (2) comprising at least one tool (3, 4),
at least one implant (5) provided with a first internal blind bore (11), comprising a first internal thread (13) on a distal end portion (12) over a given first distance d from the bottom of the first bore (11) and a frustoconical proximal end portion (16) for connection to at least one pillar (6),
said pillar comprising an at least partly frustoconical distal end portion (21) for connection to the proximal end portion (16) of the implant, arranged so that the surface (S) of said distal end portion (21) of the pillar cooperates frictionally with the surface (S') of the connecting proximal end portion (16) when the connection between implant (5) and pillar (6) is complete, said pillar (6) being provided with a second internal bore (25) for passage of the tool (3, 4), and comprising a second internal thread (30) and a first shoulder (28) forming a longitudinal stop for the tool, the second internal thread (30) extending over a given length l from a distance D from the distal peripheral end (29) of the pillar,
the ancillary system (2) comprising
a first ancillary tool (3) for fitting the pillar onto the implant and a second ancillary tool (4) for removing the pillar from the implant, the two tools each being in the form of an elongate rod about an axis (8', 8") and each provided on one side with a gripping sleeve (33, 34), and on the other side, separated by an intermediate portion (39, 40), with an end portion (36, 36') arranged to cooperate with the distal end portion (10) of the first bore (11) of the implant,
the end portion (36') of the second ancillary removal tool having a transverse dimension or diameter smaller than the inside diameter of the first internal thread (13) and extending over a distance y from the distal end (45) of the end portion (36') of the second tool, such that y > d, so that the distal end (45) of the end portion (36') can abut against the bottom (14) of the bore (11) of the implant when the second tool (4) is inserted in the implant (5) through the internal bore (11) of the pillar,
the intermediate portion (40) of the second tool (4) comprising a second external thread (38) at the distal end (36') situated at the distance y,
said second external thread (38) being arranged to cooperate with the second internal thread (30) and cause the pillar (6) to rise / to be removed relative to the implant (5) upon screwing of the second tool into the pillar, when said distal end (45) of the end portion (36') of said second tool (4) abuts against the bottom (14) of the first bore (11) of said implant (5),
implant **characterised in that** the end portion (21) of the first ancillary fitting tool (3) comprises a first external thread (37) arranged to cooperate with the first internal thread (13), and the intermediate portion (39) comprises a second shoulder (43) arranged to abut against the first shoulder (28) of the pillar (6) during screwing of said first external thread (37) into the first internal thread (13) of the implant (5) during fitting, so as to forcefully lock the proximal end portion (16) of the implant to the distal end portion (21) of the pillar.

2. Assembly according to claim 1, **characterised in that** the frustoconical proximal end portion (16) of the implant (5) and the frustoconical distal end portion (21) of the pillar (6) frictionally cooperating with each other define a frustoconical frictional surface (S, S') between them of between 5 mm² and 20 mm² when they are completely inserted one inside the other.

3. Assembly according to any one of the preceding claims, **characterised in that** the cone angle α of the truncated cones is between 3° and 16°.

4. Assembly according to claim 3, **characterised in that** the cone angle α is of the order of 5°.

5. Assembly according to any one of the preceding claims, **characterised in that** the implant (5) is substantially cylindrical with a maximum outside diameter of less than 3.2 mm.

6. Ancillary system (2) for fitting onto/removal from a dental implant (5) provided with a first internal blind bore (11) with a distal end portion (12) provided with a first internal thread, of a pillar having a second internal through-bore (25) provided with a second internal thread, **characterised in that** said system consists of a first ancillary fitting tool (3) and a second ancillary removal tool (4), both in the form of an elongate rod about an axis (8', 8"), each provided on one side with a gripping sleeve (33, 34) and on the other side, separated by an intermediate portion (39, 40), with an end portion (36, 36') arranged to be inserted in said bores,
**in that** the end portion (36) of the first ancillary fitting tool (3) comprises a first external thread (37) arranged to cooperate with the internally threaded distal end portion (13) of the first bore (11), and its intermediate portion (39) comprises a second shoulder (43) for locking the pillar (6) in abutment under compression in the second internal bore (25),
**in that** the end portion (36') of the second ancillary removal tool (4) has a transverse dimension or diameter smaller than the diameter of the internally threaded distal end portion so that it is suitable for abutting against the threaded bottom (14) of the first bore when the second tool (4) is inserted in the implant (5) through the pillar (6), and its intermediate portion (40) comprises a second external thread (38) arranged to cooperate with the second internal thread (30) of the second bore (25) and cause the pillar (6) to rise / to be removed relative to the implant (5) upon screwing, when the end portion (36') of said second tool (4) abuts against the bottom (14) of the first bore (11).

7. Ancillary system (2) according to claim 6, **characterised in that** the gripping sleeves (33, 34) comprise means (35) for adaptation to a torque wrench for tightening/ loosening or to a motor suitable for authorising a tightening/loosening torque for the tools of between 10 N.cm and 20 N.cm.
